Europäisches Patentamt

(19) European Patent Office

Office européen des brevets

(11) Publication number: **0 005 069**
**B1**

(12) # EUROPEAN PATENT SPECIFICATION

(45) Date of publication of patent specification: **11.11.81**

(21) Application number: **79300666.9**

(22) Date of filing: **20.04.79**

(51) Int. Cl.³: **C 23 G 3/00, B 65 G 29/02, B 08 B 13/00**

(54) Washing installation for machined parts.

(30) Priority: **21.04.78 ES 469727**

(43) Date of publication of application:
**31.10.79 Bulletin 79/22**

(45) Publication of the grant of the European patent:
**11.11.81 Bulletin 81/45**

(84) Designated Contracting States:
**BE CH DE FR GB IT LU NL SE**

(56) References cited:
**DE - B - 1 546 072**
**FR - A - 2 090 474**
**US - A - 4 055 246**

(73) Proprietor: **INGENIERIA AGULLO, S.A.**
**Balmes, 191**
**Barcelona - 6 (ES)**

(72) Inventor: **Agullo, Miguel Negui**
**Balmes 191**
**Barcelona 6 (ES)**

(74) Representative: **Orr, William Maclean et al,**
**Haseltine Lake & Co Hazlitt House 28**
**Southampton Buildings Chancery Lane**
**London WC2A 1AT (GB)**

Courier Press, Leamington Spa, England.

Washing installation for machined parts

This invention relates to a washing installation for washing articles such as machined parts having internal ducts, said installation comprising a washing machine and a transfer device for transferring articles to be washed to the washing machine, said washing machine comprising a rotary article-holder which is rotatable stepwise from an article-loading and unloading station and which provides a plurality of washing stations at which articles held by the article-holder can undergo washing treatments before returning to the loading and unloading station, a plurality of holding locations provided on said holder to hold a plurality of articles, a plurality of washing devices provided one at each of said holding locations for applying a washing medium to the article held at the location, and a plurality of latching devices provided one at each of said holding locations for holding a corresponding article at each location during rotation of the article holder.

Washing machines are very well known in which the articles to be washed are transferred by a conveyor device or pushed by a system of push bars with eclipsable fingers. These machines have wheels placed on the bars and the articles pass from these bars to the wheel and are taken step-by-step by the wheels through washing stations until they have gone round completely and returned to the original positions.

A variation in these known machines consists of placing washing boxes at each of the wheel stations, so that washing takes place the whole time the article moves from station to station, due to the gradual turning of the wheel.

The articles are normally fixed within each of the wheel stations by means of a latch finger which is opened by the action of a spring and an eccentric. This latch finger is open in the loading and unloading station and closed in all the other stations.

One of the main disadvantages of placing the articles on washing jets of the actual wheel, consists of the fact that the flow of liquid is continuous in all of the stations, including the loading and unloading stations. As a result of this, the force of the jets acts during the loading and unloading of articles, which is a very delicate moment and there is the risk that the jets may make the articles jump and not become properly held in position and/or cause damage to the washing machine or the articles.

A washing installation according to the invention is able to overcome the disadvantages of the known washing machines and achieves greater efficiency in forcing the washing liquid through the inner ducts of the article to be washed (when the article is an internally ducted part such as a machined part).

Accordingly, the present invention provides a washing installation for washing articles such as machined parts having internal ducts, said installation comprising a washing machine and a transfer device for transferring articles to be washed to the washing machine and said washing machine comprising:

a rotary article-holder which is rotatable step-wise from an article-loading and unloading station and which provides a plurality of washing stations at which articles held by the article holder can undergo washing treatments before returning to the loading and unloading station, a plurality of holding locations provided on the said holder to hold a plurality of articles, a plurality of washing devices provided one at each of said holding locations for applying a washing medium to the article held at the location, and a plurality of latching devices provided one at each of said holding locations for holding a corresponding article at each location during rotation of the article-holder;

characterised in that each washing device is connected to a corresponding one of said latching devices so that an article, when held in the corresponding holding location, is also held against the washing device to be washed thereby;

and in that a distributor device is provided for distributing washing liquid to the washing devices which comprises a fixed casing through which is taken a drive shaft for said article-holder, a supply pipe connected to said casing, and a distributor mounted on the drive shaft for rotation therewith and having ducts corresponding in number to the number of washing devices and communicable with the interior of the casing and leading to said washing devices.

The invention will now be described in detail, by way of example only, with reference to the accompanying drawings in which:—

Figure 1 is a perspective view of a washing installation according to the invention and comprising a washing machine formed by two rotary article-holders, and a transfer device for transferring articles to the article-holders;

Figures 2 and 3 are detailed views, in side elevation and in front elevation respectively, of a washing station of one of the article-holders shown in Figure 1; and

Figures 4 and 5 illustrate transverse and longitudinal cross-sectional views respectively, of a distributor element for controlling the supply of washing liquid to the washing stations of the article-holders.

Referring now to the drawings, there is shown a washing installation comprising a washing machine formed by two rotary article-holders, and a transfer device for transferring articles, such as internally ducted machined parts, to the article-holders. The transfer device is designated by reference numeral 1 and comprises fixed and movable longitudinal bars. An article can be supported on the fixed bars, and is then transferred by the movable bars to a load-' ing (and unloading) station of each article-holder.

Each article holder takes the form of a rotary wheel 2 which is provided with a plurality of article-holding locations, formed by housings 3, and which is rotatable step-wise from the loading and unloading station and which provides a plurality of washing stations at which articles held by the article holder undergo washing treatments before returning to the loading and unloading station at which a washed article may be transferred back to the transfer device 1.

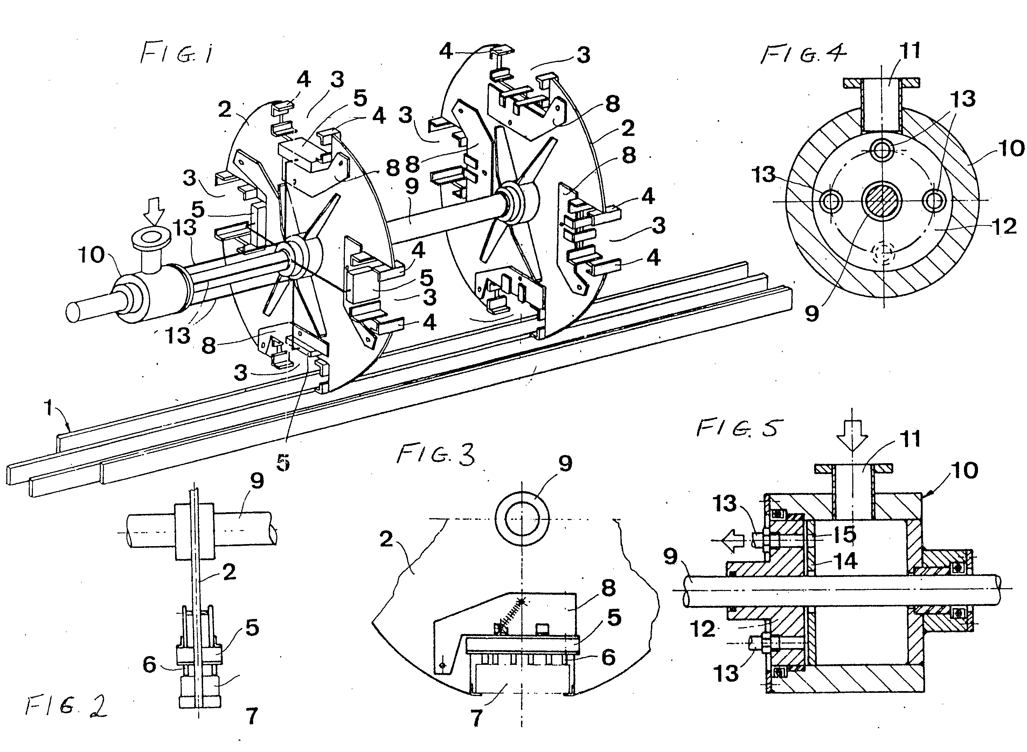

The loading and unloading station is provided, at any one time, by the lowermost of the housings 3. As shown in Figures 2 and 3, an article 7 is held at the loading and unloading station. At all times, except for the instant of loading or unloading of the articles 7, a latching device provided at each housing 3 is operative to hold the article 7 in position and comprises a latch finger 8. Each housing 3 includes flanged holders 4 which cooperate with the latch finger 8 in order to hold the article 7 in position.

At each housing 3, there is provided a washing device in the form of a washing box 5 having outlet nozzles 6 which direct washing liquid onto the article 7. As will be seen in Figures 2 and 3, the outlet nozzles 6 contact the surface of the article 7, and may be in registry with entrance holes to internal ducts formed in the article 7, when the latter is a machined part.

Each latch finger 8 is pivotally mounted on the wheel 2 for movement between a closed, article-holding position, as shown in Figures 2 and 3, and an open, release position (not shown). When the latch finger 8 is in the release position, an article 7 may be loaded or unloaded from or to the transfer device 1.

In order to provide improved washing efficiency each washing box 5 is connected to a corresponding latch finger 8 for movement therewith. Thus, when the latch finger 8 moves to the closed position as shown, the washing box 5 applies a clamping force to the article 7 (preferably via the nozzles 6) to push the article 7 against the flange holders 4, and a very powerful washing action can be applied to the surface of the article 7 and/or to internal ducts of the article 7.

As will now be described with reference to Figures 4 and 5, a washing liquid distribution arrangement is provided to supply washing liquid to the washing boxes when the latter are in positions other than the loading and unloading station. On the common shaft 9 of the two wheels 2 there is mounted a distributor device 10 which comprises a fixed housing through which the shaft 9 is taken. Washing liquid is supplied to the distributor device 10 via a supply pipe 11, which then passes to the washing boxes 5 via ducts 13, equal in number to the number of washing boxes 5, which lead from outlet passages provided in a distributor 12 which is rotatable with the shaft 9.

In order to control the distribution of washing liquid to the washing boxes 5 as a function of the rotation of the wheels 2, an apertured control plate 14 is fixed in the device 10 and has apertures 15 which register intermittently with the ducts 13. Thereby, the outlet points of the washing liquid can be pre-set.

The arrangement of the control plate 14 is such that no washing liquid is supplied to a washing box 5 when the latter is at the loading and unloading station for the articles 7.

When a washed article 7 is to be unloaded e.g. from the left-hand wheel 2 of Figure 1, the latch finger 8 (and the washing box 5 connected thereto) is pivoted against spring action to a released position (not shown), and the movable bars of the transfer device 1 then move upwardly, horizontally and then downwardly in order to transfer the washed article 7 from the unloading station onto the fixed bars of the transfer device 1 at a position intermediate the two wheels 2. Thereafter, the article may be transferred to undergo a washing sequence in the right-hand wheel 2.

## Claims

1. A washing installation for washing articles such as machined parts having internal ducts, said installation comprising a washing machine and a transfer device (1) for transferring articles (7) to be washed to the washing machine and said washing machine comprising:

a rotary article-holder (2) which is rotatable step-wise from an article-loading and unloading station and which provides a plurality of washing stations at which articles held by the article holder can undergo washing treatments before returning to the loading and unloading station, a plurality of holding locations (3) provided on the said holder (2) to hold a plurality of articles, a plurality of washing devices (5) provided one at each of said holding locations (3) for applying a washing medium to the article held at the location, and a plurality of latching devices (8) provided one at each of said holding locations for holding a corresponding article at each location during rotation of the article-holder,

characterised in that each washing device (5) is connected to a corresponding one of said latching devices (8) so that an article, when held in the corresponding holding location (3), is also held against the washing device (5) to be washed thereby;

and in that a distributor device (10) is provided for distributing washing liquid to the washing devices (5) which comprises a fixed casing through which is taken a drive shaft (9) for said article-holder (2), a supply pipe (11) connected to said casing, and a distributor (12) mounted on the drive shaft (9) for rotation therewith and having ducts (13) corresponding in number to the number of washing devices (5) and communicable with the interior of the casing and leading to said washing devices (5).

2. A washing installation according to claim 1, characterised in that an apertured control plate (14) is fixed in the casing and is arranged to control the communication between the ducts (13) of said distributor (12) and the interior of the casing, the apertures (15) of the control plate (14) coinciding intermittently with said ducts (13) during the stepped rotation of the article-holder (2) so as to pre-set the outlet points of the washing liquid.

3. A washing installation according to claim 2, characterised in that the control plate (14) is so arranged as to prevent the supply of washing liquid to a washing device (5) when the latter is at the loading and unloading station.

4. A washing installation according to any one of the preceding claims, characterised by a pair of axially spaced article-holders (2) mounted on said drive shaft (9).

## Revendications

1. Installation de lavage pour laver des articles tels que des pièces usinées pourvues de passages internes, l'installation comprenant une machine de lavage et un dispositif de transfert (1) qui transfère les articles (7) à laver à la machine de lavage, ladite machine de lavage comprenant

un porte-articles (2) rotatif qui tourne pas à pas d'un poste de chargement et de déchargement des articles et qui comprend plusieurs postes de lavage où les articles qui sont maintenus par le porte-articles peuvent subir des traitements de lavage avant de revenir au poste de chargement et de déchargement, plusieurs emplacements de support (3) prévus sur ledit support (2) et destinés à maintenir plusieurs articles, plusieurs dispositifs de lavage (5) prévus à raison d'un pour chacun des emplacements de support (3) et destinés à appliquer un liquide de lavage à l'article maintenu dans cet emplacement, et plusieurs dispositifs de blocage (8) prévus à raison d'un pour chacun des emplacements de support et destinés à maintenir un article dans chacun des emplacements lors de la rotation du porte-articles, caractérisée en ce qu'à chaque dispositif de lavage (5) est relié celui des dispositifs de blocage (8) qui lui correspond de manière qu'un article, quand il est maintenu dans l'emplacement de support (3) correspondant, est également maintenu contre le dispositif de lavage (5) au moyen duquel il doit être lavé;

et en ce qu'un dispositif distributeur (10) est prévu pour distribuer le liquide de lavage aux dispositifs de lavage (5) et comprend un carter fixe par lequel passe un arbre d'entraînement (9) destiné audit porte-articles (2), un tube d'alimentation (11) relié audit carter et un distributeur (12) monté sur l'arbre d'entraînement (9) et solidaire en rotation de celui-ci et comprenant des passages (13) qui correspondent en nombre au nombre de dispositifs de lavage (5) et pouvant communiquer avec l'intérieur du carter et conduisant vers lesdits dispositifs de lavage (5).

2. Installation de lavage suivant la revendication 1, caractérisée en ce qu'une plaque de commande ajourée (14) fixée dans le carter est prévue pour commander la communication entre les conduites (13) du distributeur (12) et l'intérieur du carter, les ouvertures (15) de la plaque de commande (14) venant de façon intermittente en coïncidence avec lesdites conduites (13) lors de la rotation pas à pas du porte-articles (2) de manière à prédéterminer les points de sortie du liquide de lavage.

3. Installation de lavage suivant la revendication 2, caractérisée en ce que la plaque de commande (14) est disposée de manière à empêcher l'envoi de liquide de lavage à un dispositif de lavage (5) quand ce dernier se trouve au poste de chargement et de déchargement.

4. Installation de lavage suivant l'une des revendications précédentes, caractérisée par une paire de porte-articles (2) espacés axialement et montés sur ledit arbre d'entraînement (9).

## Patentansprüche

1. Wascheinrichtung zum Waschen von Gegenständen, wie bearbeiteten Werkstücken mit inneren Kanälen, mit einer Waschmaschine und mit einer Transportvorrichtung (1) zum Transportieren der zu waschenden Gegenstände (7) zur Waschmaschine,

wobei die Waschmaschine aus einem drehbaren Werkstückhalter (2), der, ausgehend von einer Station zum Be- und Entladen der Werkstücke, schrittweise drehbar und mit einer Mehrzahl von Waschstationen versehen ist, an denen vom Werkstückhalter gehaltene Werkstücke vor Rückkehr zur Be- und Entladestation einer Waschbehandlung unterworfen werden, aus einer Mehrzahl von Halterungsstellen (3), die zum Festhalten einer Mehrzahl von Werkstücken auf den Werkstückhalter (2) vorgesehen sind, aus einer Mehrzahl von Waschvorrichtungen (5) jeweils an jeder der Halterungsstellen (3) zum Aufbringen eines Waschmediums auf das in der Halterungsstelle gehalterte Werkstück, und aus einer Mehrzahl von Verriegelungsvorrichtungen (8) jeweils an jeder der Halterungsstellen zum Festhalten eines entsprechenden Werkstücks an jeder Halterungsstelle während der Drehung des Werkstückhalters besteht,

dadurch gekennzeichnet, daß jede Waschvorrichtung (5) mit jeweils einer zugeordneten Verriegelungsvorrichtung (8) verbunden ist, so daß ein Werkstück, wenn es in der entsprechenden Halterungsstelle (3) festgehalten wird, auch gegen die Waschvorrichtung (5), durch welche es gewaschen wird, gehalten ist,

und dadurch, daß eine Verteilervorrichtung (10) zum Verteilen von Waschflüssigkeit auf die Waschvorrichtungen (5) vorgesehen ist, die aus einem festen Gehäuse, durch welche eine Antriebswelle (9) für den Werkstückhalter (2) verläuft, aus einer Zuführleitung (11), die mit dem Gehäuse verbunden ist, und aus einem Verteiler (12) besteht, der auf der Antriebswelle (9) so angebracht ist, daß er sich mit dieser dreht und der Leitungen (13) aufweist, deren Zahl der Zahl der Waschvorrichtungen (5) entspricht und die mit dem Inneren des Gehäuses verbunden sind und zu den Waschvorrichtungen (5) führen.

2. Wascheinrichtung nach Anspruch 1, dadurch gekennzeichnet, daß im Gehäuse eine Öffnungen aufweisende Steuerplatte (14) befestigt und so angeordnet ist, daß sie die Verbindung zwischen den Leitunggen (13) des Verteilers (12) und dem Innenraum des Gehäuses steuert, wobei die Öffnungen (15) der Steuerplatte (14) während der schrittweisen Drehung des Werkstückhalters (2) intermittierend mit den Leitungen (13) fluchten, um so die Auslaßstellen der Waschflüssigkeit vorherzubestimmen.

3. Wascheinrichtung nach Anspruch 2, dadurch gekennzeichnet, daß die Steuerplatte (14) so angeordnet ist, daß sie die Zufuhr von Waschflüssigkeit zu einer Waschvorrichtung (5) dann verhindert, wenn die letztere sich in der Be- und Entladestation befindet.

4. Wascheinrichtung nach einem der vorhergehenden Ansprüche, gekennzeichnet durch zwei zueinander axialen Abstand aufweisende Werkstückhalter (2), die auf der Antriebswelle (9) angebracht sind.